# EUROPEAN PATENT APPLICATION

(11) **EP 4 398 386 A1**
(43) Date of publication of application: **10.07.2024**
(21) Application number: 22932703.6
(22) Date of filing: 25.03.2022
(51) Int. Cl.: H01M 50/147, H01M 50/342, H01M 50/474

(54) **BATTERY CELL, BATTERY, ELECTRICAL DEVICE, AND METHOD AND DEVICE FOR PREPARING BATTERY**

(71) Applicant: Contemporary Amperex Technology Co., Limited, Ningde City, Fujian 352100 (CN)
(72) Inventor: SU, Huasheng, Ningde City, Fujian 352100 (CN); XING, Chengyou, Ningde City, Fujian 352100 (CN); LI, Quankun, Ningde City, Fujian 352100 (CN); ZHUO, Weirong, Ningde City, Fujian 352100 (CN); WANG, Peng, Ningde City, Fujian 352100 (CN); JIN, Haizu, Ningde City, Fujian 352100 (CN)
(74) Representative: Ran, Handong
(86) International application number: PCT/CN2022/082982
(87) International publication number: WO 2023/178639

(57) **Abstract**

Embodiments of the present application provide a battery cell, a battery, an electrical device, and a method and device for preparing the battery, capable of improving the overall performance of the battery. The battery cell (20) comprises: a housing (210), having an opening (211); an electrode assembly (220), accommodated in the housing (210); an end cover (310), covering the opening (211) and provided with a pressure relief mechanism (330); and an insulating member (340), disposed between the end cover (310) and the electrode assembly (220) to insulate and isolate the end cover (310) from the electrode assembly (220), the insulating member (340) comprising a body (341) and a boss (342), a first through hole (343) being formed in the area of the body (341) corresponding to the pressure relief mechanism (330), the boss (342) being connected to the body (341) and extending towards the electrode assembly (220), a second through hole (344) being formed in a side surface of the boss (342), and the first through hole (343) and the second through hole (344) being used for forming an exhaust channel from the interior of the battery cell (20) to the pressure relief mechanism (330).

## Description

### TECHNICAL FIELD

The present application relates to the field of batteries, and in particular relates to a battery cell, a battery, an electrical device, and a method and a device for manufacturing the battery.

### BACKGROUND

Energy conservation and emissions reduction are key to the sustainable development of the automobile industry. In such a case, electric vehicles have become an important part in the sustainable development of the automobile industry due to their advantages of energy conservation and environmental friendliness. As for the electric vehicles, the battery technology is an important factor concerning their development.

Therefore, how to improve the safety performance of a battery is a technical issue that urgently needs to be addressed in the battery technology.

### SUMMARY

The present application provides a battery cell, a battery, an electrical device, and a method and a device for manufacturing the battery, which can improve the overall performance of the battery.

In a first aspect, a battery cell is provided. The battery cell includes: a case having an opening; an electrode assembly accommodated in the case; an end cap covering the opening and provided with a pressure relief mechanism, the pressure relief mechanism being configured to be actuated when an internal pressure or temperature of the battery cell reaches a preset threshold so as to discharge the internal pressure to the exterior of the battery cell; and an insulating part, disposed between the end cap and the electrode assembly to insulate and separate the end cap and the electrode assembly, the insulating part comprising a body and a boss, a region of the body corresponding to the pressure relief mechanism being provided with a first through hole, the boss being connected to the body and extending towards the electrode assembly, a side face of the boss being provided with a second through hole, and the first through hole and the second through hole being configured to form an exhaust path from the interior of the battery cell to the pressure relief mechanism.

In the technical solution of the embodiment of the present application, an insulating part for insulating and separating the end cap and the electrode assembly is disposed in the battery cell. The insulating part includes a boss that can block a deformed electrode assembly in the battery cell from contacting the pressure relief mechanism on the end cap, prevent the electrode assembly from influencing the pressure relief mechanism, ensure the normal operation of the battery cell and improve the safety performance of the battery cell. Besides, a side face of the boss is provided with a second through hole which, together with the first through hole in the body of the insulating part, forms an exhaust path from the interior of the battery cell to the pressure relief mechanism, therefore, a pressure relief function of the pressure relief mechanism is ensured, thereby further ensuring the safety performance of the battery cell.

In some possible embodiments, the boss is of a hollow structure.

In the technical solution of the embodiment, the interior of the boss is of a hollow space, and the hollow space as well as the first through hole and the second through hole jointly form an exhaust path from the interior of the battery cell to the pressure relief mechanism, thereby expanding the space of the exhaust path, improving the exhaust effect of the battery cell and enhancing the safety performance of the battery cell. Besides, the boss is provided with a hollow structure, which can reduce mass of the boss so as to lighten the whole mass of the battery cell and improve energy density of the battery cell.

In some possible embodiments, a ratio of the area of the second through hole to the area of a pressure relief region in the pressure relief mechanism is greater than or equal to 40%.

In the technical solution of the embodiment, the area of the second through hole is designed according to the area of a pressure relief region in the pressure relief mechanism so as to enable the exhaust effect of the second through hole to be adapted to the pressure relief function of the pressure relief mechanism, avoid that the pressure relief function of the pressure relief mechanism is influenced by a too small second through hole, and ensure the exhaust effect of the pressure relief mechanism so as to ensure the safety performance of the battery cell.

In some possible embodiments, a side face of the boss is provided with a plurality of second through holes.

In the technical solution of the embodiment, a plurality of second through holes are formed on a side face of the boss, which brings about a better exhaust effect so as to further ensure the pressure relief function of the pressure relief mechanism.

In some possible embodiments, the pressure relief mechanism and a tab of the electrode assembly are correspondingly disposed, the boss has a first wall facing the interior of the battery cell, and a region, corresponding to the first through hole, in the first wall is a physical region.

In the technical solution of the embodiment, the pressure relief mechanism on the end cap and a tab of the electrode assembly are correspondingly disposed, and a region, corresponding to the first through hole, in the first wall of the boss is a physical region. As the first through hole corresponds to the pressure relief mechanism, a region, corresponding to the pressure relief mechanism, in the first wall of the boss is a physical region. The first wall has a good separation effect on the pressure relief mechanism and the tab of the electrode assembly, and can effectively prevent the tab of the electrode assembly from tilting and overlapping on the pressure relief mechanism, thereby improving the safety performance of the battery cell.

In some possible embodiments, the battery cell further includes: a current collection member and an electrode terminal installed on the end cap; wherein the current collection member is configured to connect the electrode terminal and the electrode assembly, and the first wall of the boss is configured to abut against the current collector member.

In the technical solution of the embodiment, the first wall of the boss, in addition to being used to separate the electrode assembly and the pressure relief mechanism, can also be configured to abut against the current collection member to improve the installation stability of the current collection member in the battery cell, thereby improving the use reliability of the battery cell.

In some possible embodiments, the boss is further provided with a second wall, the second wall is connected to the first wall and is slantly disposed toward a center of the end cap relative to the first wall, and an included angle between the first wall and the second wall is an obtuse angle.

In the technical solution of the embodiment, an inclined second wall is disposed in the boss, which can not only ensure the separation performance between the electrode assembly and the pressure relief mechanism, but also save the internal space of the battery cell, improves the energy density of the battery cell, avoids interference from the boss with other components assembled on the insulating part, improves the production efficiency and the overall performance of the battery cell, while the separation performance between the electrode assembly and the pressure relief mechanism is ensured.

In some possible embodiments, a projection of the second wall in a plane where the first through hole is located is positioned in the first through hole.

In the technical solution of the embodiment, the correspondence between the second wall and the first through hole is good, and the second wall can have a good separation effect on the pressure relief mechanism and the tab of the electrode assembly. Moreover, the projection of the second wall in the plane where the first through hole is located does not exceed the region where the first through hole is located. The second wall does not occupy too much internal space of the battery cell, reducing the impact of the boss on the internal space of the battery cell.

In a second aspect, a battery is provided, wherein the battery includes a box body, and the battery cell in the second aspect, and the battery cell is accommodated in the box body.

In a third aspect, an electrical device is provided, wherein the electrical device includes the battery in the third aspect, and the battery can provide electric energy for the electrical device.

In a fourth aspect, a method for manufacturing a battery cell is provided. The method includes: providing a case, the case having an opening; providing an electrode assembly; providing an end cap, the end cap being provided with a pressure relief mechanism, the pressure relief mechanism being configured to be actuated when an internal pressure or temperature of the battery cell reaches a preset threshold so as to discharge the internal pressure to the exterior of the battery cell; providing an insulating part, the insulating part comprising a body and a boss, a region of the body corresponding to the pressure relief mechanism being provided with a first through hole , the boss being connected to the body and extending towards the electrode assembly, a side face of the boss being provided with a second through hole, and the first through hole and the second through hole being configured to form an exhaust path from the interior of the battery cell to the pressure relief mechanism; accommodating the electrode assembly in the case and covering the opening by the end cap; and disposing the insulating part between the end cap and the electrode assembly so as to insulate and separate the end cap and the electrode assembly.

In a fifth aspect, a device for manufacturing a battery cell is provided. The device includes: a first providing module, configured to provide a case, the case having an opening; a second providing module, configured to provide an electrode assembly; a third providing module, configured to provide an end cap, the end cap being provided with a pressure relief mechanism, the pressure relief mechanism being configured to be actuated when an internal pressure or temperature of the battery cell reaches a preset threshold so as to discharge the internal pressure to the exterior of the battery cell; a fourth providing module, configured to provide an insulating part, the insulating part comprising a body and a boss, a region of the body corresponding to the pressure relief mechanism being provided with a first through hole, the boss being connected to the body and extending towards the electrode assembly, a side face of the boss being provided with a second through hole, and the first through hole and the second through hole being configured to form an exhaust path from the interior of the battery cell to the pressure relief mechanism; and an installation module, configured to accommodate the electrode assembly in the case and cover the opening by the end cap, and to dispose the insulating part between the end cap and the electrode assembly so as to insulate and separate the end cap and the electrode assembly.

In the technical solution of the embodiment of the present application, an insulating part for insulating and separating the end cap and the electrode assembly is disposed in the battery cell. The insulating part includes a boss that can block a deformed electrode assembly in the battery cell from contacting the pressure relief mechanism on the end cap, prevent the electrode assembly from influencing the pressure relief mechanism, ensure the normal operation of the battery cell and improve the safety performance of the battery cell. Besides, a side face of the boss is provided with a second through hole which, together with the first through hole in the body of the insulating part, forms an exhaust path from the interior of the battery cell to the pressure relief mechanism, therefore, a pressure relief function of the pressure relief mechanism is ensured, thereby further ensuring the safety performance of the battery cell.

### BRIEF DESCRIPTION OF THE DRAWINGS

In order to more clearly illustrate the technical solution of the embodiments of the present application, the accompanying figures required in the embodiments of the present application will be briefly introduced, obviously, the accompanying drawings described below are merely some embodiments of the present application, for those of the ordinary skill in the art, they can also obtain other accompanying drawings according to the accompanying drawing without paying any creative effort.
Fig.1 is a schematic structural diagram of a vehicle disclosed by an embodiment of the present application;
Fig.2 is a schematic structural diagram of a battery disclosed by an embodiment of the present application;
Fig.3 is a schematic structural diagram of a battery cell disclosed by an embodiment of the present application;
Fig.4 is a schematic enlarged view of an end cap and an insulating part in Fig.3;
Fig.5 is a schematic structural diagram of the insulating part disclosed by an embodiment of the present application;
Fig.6 is a schematic diagram of a local structure of the battery cell disclosed by another embodiment of the present application;
Fig.7 is a top view and a sectional view of a combined component of the end cap and the insulating part disclosed by an embodiment of the present application;
Fig.8 is a schematic structural diagram of the insulating part disclosed by another embodiment of the present application;
Fig.9 is a top view and a sectional view of a combined component of the end cap and the insulating part disclosed by another embodiment of the present application;
Fig. 10 is a schematic diagram of a local structure of the battery cell disclosed by another embodiment of the present application;
Fig. 11 is a schematic structural diagram of the battery cell disclosed by another embodiment of the present application;
Fig. 12 is a schematic flow diagram of a method for manufacturing a battery cell disclosed by an embodiment of the present application;
Fig. 13 is a schematic block diagram of a device for manufacturing a battery cell disclosed by an embodiment of the present application.

In the drawings, the figures are not drawn at the ratio.

### DESCRIPTION OF EMBODIMENTS

The embodiments of the present application will be further described in detail in the following embodiment by referring to the appended drawings. The detailed description and drawings in the following embodiments are merely used for illustratively explaining the principle of the present application, rather than limiting the scope of the present application, that is, the present application is not limited by the described embodiments below.

In the description of the present application, it should be noted that, unless otherwise noted, "a plurality of" means two or more; orientation or positional relationships indicated by the terms "upper", "lower", "left", "right", "inner", "outer", and the like are only for the convenience of description of the present application and simplification of description rather than indicating or implying that the referenced device or element must have a particular orientation, be constructed and operated in a particular orientation, and thus are not to be construed as limiting the present application. In addition, the terms "first", "second", "third", and the like are used for descriptive purposes only and are not to be construed as indicating or implying relative importance. "Vertical" is not strictly vertical, but within the allowable range of error. "Parallel" is not strictly parallel, but within the allowable range of error.

Nouns of locality appearing in the following description are all directions shown in the drawings and do not limit the specific structure of the present application. In the description of the present application, it should also be noted that, unless otherwise expressly specified and limited, the terms "mounted", "connected" and "attached" should be understood in a broad sense, for example, it can be "fixedly connected" or "detachably connected", or "integrally connected"; it can be "directly connected" or "indirectly connected through an intermediate medium". The specific meanings of the above terms in the present application may be understood by those of ordinary skill in the art depending on specific circumstances.

The term "and/or" in the present application is simply a description of the association relationship of the associated objects, indicating that three relationships can exist, for example, A and/or B, which may mean: A exists alone, both A and B exist, and B exists alone. In addition, the character "/" in the present application generally indicates an alternative relationship between the front and back associated objects.

Unless otherwise defined, all the technical and scientific terms used in the present application have the same meanings as that are commonly understood by those skilled in the art of the present application. Terms used herein in the description of the present application are to describe specific embodiments only and are not intended to limit the present application. The terms "including" and "having" and any variations thereof in the description and claims as well as the drawings of the present application are intended to cover a non-exclusive inclusion. The terms "first", "second", and so on in the description and claims or accompanying drawings of the present application are intended to distinguish different objects, but not to describe particular sequences or primary-secondary relationships.

The "embodiment" mentioned in the present application means that special features, structures, or characteristics described in conjunction with the embodiments may be included in at least one embodiment of the present application. The occurrence of "embodiment" in various positions in the description does not necessarily refer to the same embodiment, nor is it a separate or alternative embodiment that is mutually exclusive to other embodiments. It is explicitly and implicitly understood by those skilled in the art that the embodiments described herein may be combined with other embodiments.

In the present application, the battery cell may include a lithium ion secondary battery, a lithium ion primary battery, a lithium-sulfur battery, a sodium lithium-ion battery, a sodium ion battery or magnesium ion battery or the like, which is not limited in the embodiments of the present application. The battery cell may be in the form of a cylinder, a flat body, a cuboid, or any of other regular or irregular shapes, which is not limited in the embodiments of the present application. The battery cell is generally divided into three types according to the way of packaging: cylindrical battery cells, square battery cells and flexible package battery cells, which is not limited by the embodiments of the present application.

The battery mentioned in the embodiments of the present application means a single physical module comprising one or a plurality of battery cells to provide a higher voltage and capacity. For example, the battery mentioned in the present application may include a battery module or a battery pack, etc. A battery generally includes a box body for encapsulating one or a plurality of battery cells. The box body can prevent charging or discharging of the battery cell from being affected by a liquid or other foreign matters.

The battery cell comprises an electrode assembly and an electrolyte. The electrode assembly consists of a positive plate, a negative plate and a separator. The battery cell works mainly depending on movement of metal ions between the positive and negative plates. The positive plate comprises a positive current collector and a positive active material layer. The positive active material layer is coated on the surface of the positive current collector, a positive current collector, uncoated with the positive active material layer protrudes over a positive current collector coated with the positive active material layer. The positive current collector, uncoated with the positive active material layer acts as a positive electrode tab. By taking a lithium-ion battery as an example, the positive current collector material can be aluminum, and the positive active material can be lithium cobaltate, lithium iron phosphate, lithium ternary, lithium manganate, etc. The negative plate comprises a negative current collector and a negative active material layer. The negative active material layer is coated on the surface of the negative current collector. A negative current collector uncoated with the negative active material layer protrudes over a negative current collector coated with the negative active material layer. The negative current collector uncoated with the negative active material layer is used as a negative electrode tab. The negative current collector may be made of copper, and the negative active material can be carbon, silicon or the like. In order to ensure passing through of a high current without fusing, a plurality of positive electrode tabs are provided and stacked together, and the plurality of negative electrode tabs are provided and stacked together. The separator may be made of PP (polypropylene), PE (polyethylene, polyethylene) or the like. In addition, the electrode assembly may be either a wound-type or a laminated-type, which is not limited by the embodiments of the present application.

With the development of the energy technology, consumers have increasingly high requirements on the performance of a battery and a battery cell. To improve the safety performance of the battery cell, a pressure relief mechanism is disposed in the battery cell. The pressure relief mechanism can be actuated when an internal pressure or temperature of the battery cell reaches a present threshold so as to discharge the internal pressure or temperature of the battery cell, and prevent the safety issue caused by explosion of the battery cell.

In some related technical solutions, the pressure relief mechanism is positioned on the end cap of the battery cell, and is directly opposite to the electrode assembly in the battery cell. The electrode assembly may suffer deformation due to a pressure change in the battery cell or other factors such as a manufacturing process, leading to that the deformed electrode assembly overlaps on the pressure relief mechanism so as to have a certain impact on the pressure relief mechanism, thus influencing the pressure relief function of the pressure relief mechanism and even the overall performance of the battery cell.

In view of the above, the present application provides a battery cell. The battery cell includes a case, an electrode assembly, an end cap and an insulating part. Wherein the case has an opening; the electrode assembly is accommodated in the case; the end cap covers the opening of the case and is provided with a pressure relief mechanism. The insulating part is disposed between the end cap and the electrode assembly to insulate and separate the end cap and the electrode assembly, the insulating part includes a body and a boss, a region of the body corresponding to the pressure relief mechanism is provided with a first through hole , the boss is connected to the body and extends towards the electrode assembly, a side face of the boss is provided with a second through hole, and the first through hole and the second through hole are configured to form an exhaust path from the interior of the battery cell to the pressure relief mechanism. By the technical solution, the insulating part is disposed in the battery cell for insulating and separating the end cap and the electrode assembly, and the insulating part includes a boss that can block a deformed electrode assembly in the battery cell from contacting the pressure relief mechanism on the end cap, prevent the electrode assembly from influencing the pressure relief mechanism, ensure the normal operation of the battery cell, and improve the safety performance of the battery cell. Besides, a side face of the boss is provided with a second through hole which, together with the first through hole in the body of the insulating part, forms an exhaust path from the interior of the battery cell to the pressure relief mechanism, therefore, a pressure relief function of the pressure relief mechanism is ensured, thereby further ensuring the safety performance of the battery cell.

The technical solutions described in the embodiments of the present application are applicable to batteries and electrical devices using the batteries.

The electrical devices can be vehicles, mobile phones, portable devices, laptops, ships, spacecraft, electric toys, electric tools and so on. The vehicle may refer to an oil-fueled vehicle, a gas vehicle or a new energy vehicle. The new energy vehicle may be a pure electric vehicle, a hybrid vehicle or an extended-range vehicle, etc. A spacecraft may include an aircraft, a rocket, a space shuttle, a spaceship, and so on. Electric toys include fixed or mobile electric toys, for example, game machines, electric car toys, electric ship toys, electric aircraft toys, etc. Electric tools include electric metal cutting tools, electric grinding tools, electric assembling tools, and electric tools for railways, for example, electric drills, electric grinding wheel machines, electric wrenches, electric screwdrivers, electric hammers, impact electric drills, concrete vibrators, electric planers, etc. The embodiments of the present application do not make special restrictions on the above-mentioned electrical devices.

For the purpose of convenience in explanation of the following embodiments, the electrical device being a vehicle will be taken as an example for description.

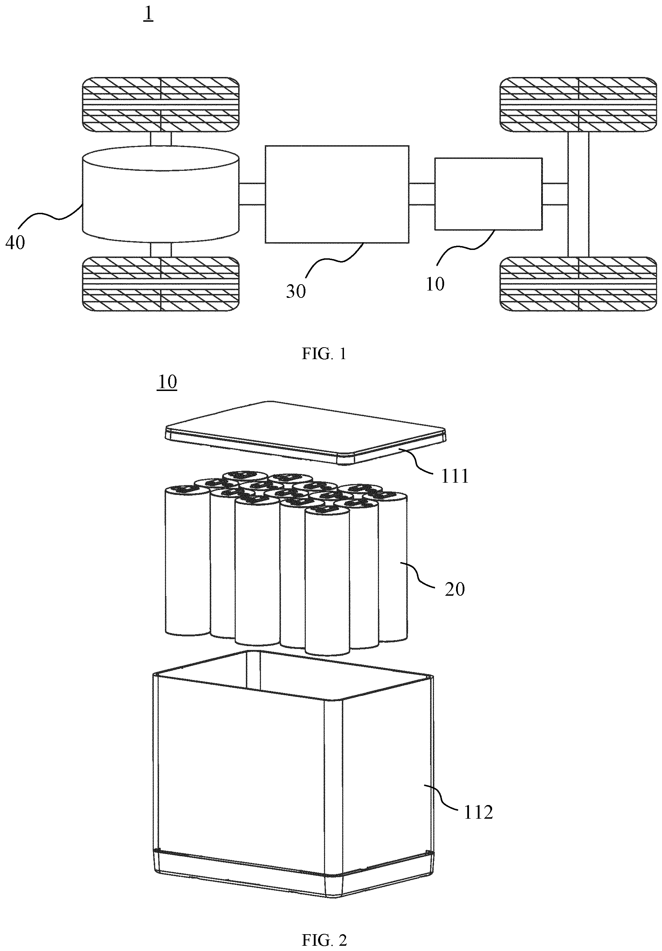

Fig. 1 illustrates a schematic structural diagram of a vehicle 1 provided by an embodiment of the present application.

The vehicle 1 can be an oil-fueled vehicle, a gas vehicle, or a new energy vehicle. The new energy vehicle can be a pure electric vehicle, a hybrid electric vehicle, or an extended-range vehicle, etc. The interior of the vehicle 1 can be equipped with a motor 40, a controller 30, and a battery 10. The controller 30 is configured to control the battery 10 to supply power to the motor 40. For example, the battery 10 is disposed at the bottom or front or rear of the vehicle 1. The battery 10 can be used to supply power to the vehicle 1, e.g., the battery 10 serving as an operating power supply for the vehicle 1 can be used in the circuit system of the vehicle 1, for example, used for meeting the working power requirements of the vehicle 1 during startup, navigation, and operation. In another embodiment of the present application, the battery 10 can not only serve as the operating power source of the vehicle 1, but also serve as a driving power source of the vehicle 1, replacing or partially replacing fuel or natural gas to provide driving power for the vehicle 1.

To meet different electricity demands, the battery 10 may include one or more battery cells. In case that the battery 10 includes a plurality of battery cells, the plurality of battery cells can be connected in series, in parallel, or in parallel-series connection. The parallel-series connection refers to a mixture of series and parallel connections. The battery 10 can also be referred to as a battery pack. In some embodiments, a plurality of battery cells can first be connected in series, in parallel, or in parallel-series connection to form a battery module, and a plurality of battery modules can then be connected in series, in parallel, or in parallel-series connection to form the battery 10. That is to say, the battery 10 can be directly formed by a plurality of battery cells, or battery modules can be first formed and then assembled into the battery 10.

Fig.2 illustrates a schematic structural diagram of a battery 10 provided by an embodiment of the present application.

As shown in Fig.2, the battery 10 may include a plurality of battery cells 20. In addition to the plurality of battery cells 20, the battery 10 further includes a box body (or a cover body), the interior of the box body is of a hollow structure, and the plurality of battery cells 20 can be accommodated in the box body. As shown in Fig.2, the box body includes two portions that are hereinafter referred to as a first portion 111 and a second portion 112 respectively, and the first portion 111 and the second portion 112 are buckled together. The shapes of the first portion 111 and the second portion 112 can be determined by the combination of the plurality of battery cells 20, and each of the first portion 111 and the second portion 112 has an opening. For example, both the first portion 111 and the second portion 112 are hollow rectangular cuboids and each of them has only one face as an opening face. The opening of the first portion 111 and the opening of the second portion 112 are oppositely arranged, and the first portion 111 and the second portion 112 are buckled together to form a box body with a closed chamber. A plurality of battery cells 20 are connected in parallel, in series or in parallel-series combination and then placed in the box body formed by buckling of the first portion 111 and the second portion 112.

In some embodiments, the battery 10 may include other structures, which will not be repeated in detail. For example, the battery 10 can further include influx components (not shown in the drawings). By means of the influx components, a plurality of battery cells 20 are electrically connected to achieve series, parallel or parallel-series connection. Specifically, the influx components can achieve electrical connection of the plurality of battery cells 20 through connecting electrode terminals of the battery cells 20. In some embodiments, the influx components are secured on the electrode terminals of the battery cells 20 by welding. Electric energy of the plurality of battery cells 20 is led out by a conductive mechanism through passing through the box body. In some embodiments, the conductive mechanism may belong to the influx components.

The number of the battery cells 20 can be set as any numerical value according to different electricity requirements. A plurality of battery cells 20 can be connected in series, in parallel, or in parallel-series connection to achieve larger capacity or power.

For the purpose of convenience in explanation, the cylindrical battery cell 20 shown in Fig.2 is mainly used as an example for explanation below. However, it should be understood that, the battery cell in the embodiment of the present application can not only be a cylindrical battery cell, but also a square battery cell or battery cells of other shapes.

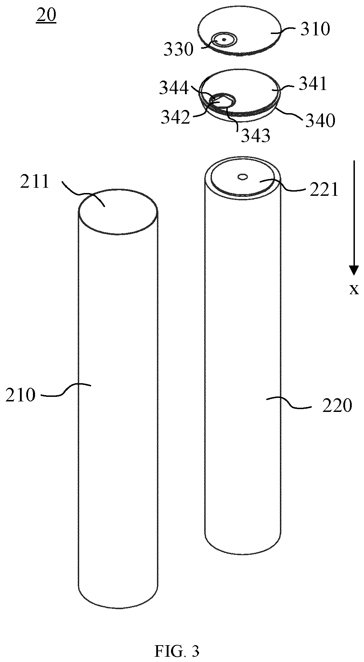

Fig.3 illustrates a schematic structural diagram of a battery cell 20 provided by an embodiment of the present application.

As shown in Fig.3, the battery cell 20 comprises: a case 210 having an opening 211; an electrode assembly 220 accommodated in the case 210; an end cap 310 covering the opening 211 and provided with a pressure relief mechanism 330, the pressure relief mechanism 330 is configured to be actuated when an internal pressure or temperature of the battery cell 20 reaches a preset threshold so as to discharge the internal pressure or temperature to the exterior of the battery cell 20; and an insulating part 340, disposed between the end cap 310 and the electrode assembly 220 to insulate and separate the end cap 310 from the electrode assembly 220, the insulating part 340 comprises a body 341 and a boss 342, a region of the body 341 corresponding to the pressure relief mechanism 330 is provided with a first through hole 343, the boss 342 is connected to the body 341 and extends towards the electrode assembly 220, a side face of the boss 342 is provided with a second through hole 344, and the first through hole 343 and the second through hole 344 are configured to form an exhaust path from the interior of the battery cell 20 to the pressure relief mechanism 330.

Specifically, in the battery cell 20 provided in the embodiment of the present application, the case 210 may be determined according to the shape of the electrode assembly 220. As an example, as shown in Fig.3, the electrode assembly 220 is a cylindrical electrode assembly formed by stacking and winding a positive plate, a negative plate, and a separator. The case 210 is a hollow cylindrical case adapted to the electrode assembly 220. In addition, at least one face of the case 210 has an opening 211 for the electrode assembly 220 to be conveniently placed inside the case 210. For example, as shown in Fig.3, in the hollow cylindrical case 210, the end face of at least one end of the case 210 has an opening 211.

Except for the case 210 and the electrode assembly 220, the battery cell 20 further comprises an end cap 310. The end cap 310 covers the opening 211 of the case 210 so as to form a closed chamber in the case 210 for accommodating the electrode assembly 220. Besides the electrode assembly 220, the closed chamber is also filled with an electrolyte, such as an electrolyte solution.

In the embodiment shown in Fig.3, the end of the cylindrical electrode assembly 220 is provided with a tab 221, which is used for conducting electrical energy of the electrode assembly 220. In some embodiments, the tab 221 may be a positive electrode tab formed by the positive plate in the electrode assembly 220, or the ptab 221 may also be a negative electrode tab formed by the negative plate in the electrode assembly 220.

In some embodiments, in order to improve the use reliability of the end cap 310, the material of the end cap 310 may be metal, such as aluminum, steel, etc.

In order to prevent the electrode assembly 220 in the case 210 from affecting the end cap 310 (for example, the electrolyte inside the battery cell 20 may affect the metal end cover 310), and to ensure the normal use and safety of the battery cell 20, an insulating part 340 is disposed between the end cap 310 and the electrode assembly 220, and the insulating part 340 is configured to insulate and separate the end cap 310 from the electrode assembly 220. As an example, the material of the insulating part 340 includes but is not limited to a plastic material.

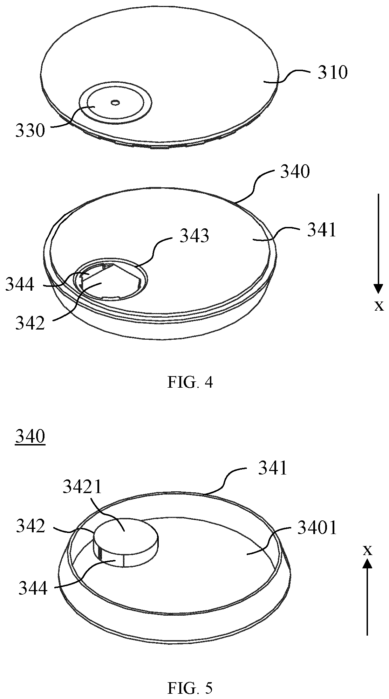

For convenience in illustration, Fig.4 illustrates a schematic enlarged view of the end cap 310 and the insulating part 340 in Fig.3.

As shown in Figs. 3 and 4, in order to ensure the safety performance of the battery cell 20, a pressure relief mechanism 330 is disposed on the end cap 310. The pressure relief mechanism 330 is configured to be actuated when an internal pressure or temperature of the battery cell 20 reaches a threshold so as to discharge the internal pressure or temperature.

In the embodiment of the present application, the pressure relief mechanism 330 can be various possible pressure relief mechanisms, which is not limited in the embodiment of the present application. For example, the pressure relief mechanism 330 can be a temperature sensitive pressure relief mechanism configured to melt when the internal temperature of the battery cell 20 equipped with a pressure relief mechanism reaches a threshold; and/or, the pressure relief mechanism 330 can be a pressure sensitive pressure relief mechanism configured to rupture when the internal pressure of the battery cell 20 equipped with a pressure relief mechanism reaches a threshold.

In some embodiments, the pressure relief mechanism 330 can be integrated with the end cap 310, or the pressure relief mechanism 330 can also be split with the end cap 310. As an example, the pressure relief mechanism 330 can be formed by setting notches on the end cap 310, or the pressure relief mechanism 330 can be a pressure relief plate independent of the end cap 310, with notches disposed on the pressure relief plate to achieve the pressure relief function.

Specifically, in case that the pressure relief mechanism 330 is a pressure relief plate independent of the end cap 310, the thickness of one region corresponding to the notch, of the pressure relief plate is less than the thickness of any of the other regions in the pressure relief plate. The region where the notch is set is the weakest position of the pressure relief mechanism 330. When too much gas generated by the battery cell 20 causes the internal pressure of the battery cell 20 to increase and reach a threshold, or when heat generated by the internal reaction of the battery cell 20 causes the internal temperature of the battery cell 20 to increase and reach a threshold, the pressure relief mechanism 330 can rupture at the notch, leading to the internal and external communication of the battery cell 20. The gas pressure and temperature are released outward through the rupturing of the pressure relief mechanism 330, thereby avoiding explosion of the battery cell 20.

As shown in Figs.3 and 4, the insulating part 340 includes a body 341. In order to allow the gas generated inside the battery cell 20 to reach the pressure relief mechanism 330, a first through hole 343 is provided in a region, corresponding to the pressure relief mechanism 330, in the body 341. In some embodiments, the region where the first through hole 343 is located at least partially overlaps with the projection region of the pressure relief mechanism 330 on the body 341 along a first direction x, wherein the first direction x is perpendicular to the end cap 310 and points to the interior of the battery cell 20. In case that the battery cell 20 is a cylindrical battery cell, the first direction x is parallel to the height direction of the cylindrical battery cell.

Continuing to refer to Figs. 3 and 4, in addition to the body 341, the insulating part 340 also has a boss 342 connected to the body 341 and extending towards the electrode assembly 220. In some embodiments, the boss 342 extends towards the first direction x. In order to better illustrate the boss 342, Fig.5 illustrates a structural schematic diagram of the insulating part 340 provided by an embodiment of the present application. The insulating part 340 shown in Fig.5 is a schematic diagram of the insulating part 340 in Fig.4 after flipping up and down.

As shown in Figs.4 and 5, in the embodiment of the present application, the boss 342 and the first through hole 343 in the body 341 are correspondingly disposed, and the boss 342 can be located on one side of the first through hole 343 facing the electrode assembly 220. As an example, in the embodiment shown in Fig.5, the boss 342 can be a cylindrical boss. Alternatively, in other alternative embodiments, the boss 342 can also be a conical boss, a circular truncated cone boss, or bosses of other shapes. The specific shape of the boss 342 is not limited in the embodiment of the present application.

By setting the boss 342, the pressure relief mechanism 330 corresponding to the first through hole 343 can be separated from the electrode assembly 220 inside the battery cell 20, and the electrode assembly 220 is prevented from deforming and overlapping on the pressure relief mechanism 330 to affect the pressure relief mechanism 330. Therefore, by setting the boss 342, the use reliability of the pressure relief mechanism 330 can be improved, the normal use of the battery cell 20 is ensured and the safety performance of the battery cell 20 is improved.

As shown in Figs. 4 and 5, on the basis that the insulating part 340 is provided with a boss 342, in order to prevent the boss 342 from affecting the pressure relief function of the pressure relief mechanism 330, a second through hole 344 is formed in one side face of the boss 342, and the second through hole 344 and the above first through hole 343 jointly form an exhaust path from the interior of the battery cell 20 to the pressure relief mechanism 330. When the internal pressure or temperature of the battery cell 20 reaches a preset threshold, the internal gas of the battery cell 20 can reach the pressure relief mechanism 330 through the second through hole 344 and the first through hole 343, and be discharged to the exterior of the battery cell 20 through the pressure relief mechanism 330 to prevent explosion of the batter cell 20 and ensure the safety performance of the battery cell 20.

In summary, in the technical solution of the embodiment of the present application, an insulating part 340 for insulating and separating the end cap 310 from the electrode assembly 220 is disposed in the battery cell 20. The insulating part 340 comprises a boss 342 that can block a deformed electrode assembly 220 in the battery cell 20 from contacting the pressure relief mechanism 330 on the end cap 310, prevent the electrode assembly 220 from influencing the pressure relief mechanism 330, ensure the normal operation of the battery cell 20 and improve the safety performance of the battery cell. Besides, a side face of the boss 342 is provided with a second through hole 344 which, together with the first through hole 343 in the body 341 of the insulating part 340, forms an exhaust path from the interior of the battery cell 20 to the pressure relief mechanism 330, therefore, a pressure relief function of the pressure relief mechanism 330 is ensured, thereby further ensuring the safety performance of the battery cell 20.

In some embodiments, the boss 342 is of a hollow structure.

As an example, as shown in Figs. 4 and 5, in the hollow structure of the boss 342, one side facing the exterior of the battery cell 20 corresponds to the first through hole 343, while one side facing the interior of the battery cell 20 has a physical wall structure, a side face of the boss 342 also has a physical wall structure, and a second through hole 344 is formed in the wall structure of the side face. The internal space of the battery cell 20 is communicated to the hollow space inside the boss 342 through the second through hole 344, and the hollow space is then connected to the space where the pressure relief mechanism 330 is located through the first through hole 343.

Through the technical solution of the embodiment, the interior of the boss 342 is a hollow space which, together with the first through hole 343 and the second through hole 344, forms an exhaust path from the interior of the battery cell 20 to the pressure relief mechanism 330, thereby expanding the space of the exhaust path, improving the exhaust effect of the battery cell 20, and enhancing the safety performance of the battery cell 20. Besides, setting the boss 342 to be in a hollow structure can reduce the mass of the boss 342 so as to lighten the overall mass of the insulating part 340 and improve the energy density of the battery cell 20.

In some embodiments, a ratio of the area of the second through hole 344 to the area of a pressure relief region in the pressure relief mechanism 330 is greater than or equal to 40%.

Specifically, in the pressure relief mechanism 330, the pressure relief region refers to a region in the pressure relief mechanism 330 for passing through of the internal gas of the battery cell 20 when the pressure relief mechanism 330 is actuated. In some embodiments, when notches are set in the pressure relief mechanism 330, the notches are enclosed into a closed pattern, and the region where the closed pattern is located can be understood as the pressure relief region in the embodiment.

Alternatively, in the pressure relief mechanism 330, the pressure relief region may refer to a region in the end cap 310 for installation of the pressure relief mechanism 330. In some embodiments, when the pressure relief mechanism 330 is a pressure relief plate independent of the end cap 310, a holding area (such as a through hole) is formed in the end cap 310 for installation of the pressure relief plate, which can be understood as the pressure relief region in the embodiment.

In the embodiment, the second through hole 344 is a regular or irregular through hole, which is formed on the side face of the cylindrical boss 342. For example, as shown in Fig.5, the second through hole 344 is a rectangular through hole. For another example, the second through hole 344 may also be in the shape of a circle, a polygon, or other shapes. The present application does not limit the specific shape of the second through hole 344.

In the technical solution of the embodiment, the area of the second through hole 344 is designed according to the area of a pressure relief region in the pressure relief mechanism 330 so as to enable the exhaust effect of the second through hole 343 to be adapted to the pressure relief function of the pressure relief mechanism 330, avoid that the pressure relief function of the pressure relief mechanism 330 is influenced by a too small second through hole 344, and ensure the exhaust effect of the pressure relief mechanism 330 so as to ensure the safety performance of the battery cell 20.

Except for the embodiment shown in Fig.5 in which a second through hole 344 is formed on the side face of the boss 342, in other embodiments, a plurality of second through holes 344 are formed on the side face of the boss 342.

Through the technical solution of the embodiment, there are a plurality of second through holes 344 on the side face of the boss 342, and the exhaust effect of the plurality of second through holes 344 is better, which can further ensure the pressure relief function of the pressure relief mechanism 330.

In some embodiments, the pressure relief mechanism 330 and the tab 221 of the electrode assembly 220 are correspondingly disposed, and the boss 342 has a first wall 3421 facing the interior of the battery cell 20. A region corresponding to the first through hole 343, in the first wall 3421 is a physical region. Wherein, the physical region refers to a region without through holes.

In the embodiment, the projection region of the first through hole 343 on the first wall 3421 along the first direction x may be the region corresponding to the first through hole 343, in the first wall 3421.

As an example, as shown in Fig.5, the first wall 3421 is parallel to the main wall 3401 in the body 341 of the insulating part 340, and the main wall 3401 is parallel to the end cap 310 and is provided with a first through hole 343. All regions in the first wall 3421 correspond to the first through hole 343, and all regions in the first wall 3421 are physical regions. In other words, all regions in the first wall 3421 are not provided with through holes.

Certainly, in other examples, the first wall 3421 may be slantly disposed relative to the main wall 3401 in the body 341 of the insulating part 340, that is, the first wall 3421 is not parallel to the main wall 3401 in the body 341. Only some regions in the first wall 3421 correspond to the first through hole 343. The present application does not limit the specific settings of the first wall 3421.

Through the technical solution of the embodiment, a region corresponding to the first through hole 343, in the first wall 3421 of the boss 342 is a physical region. The first wall 3421 has a good separation effect on the pressure relief mechanism 330 and the electrode assembly 220, which can further improve the safety performance of the battery cell 20.

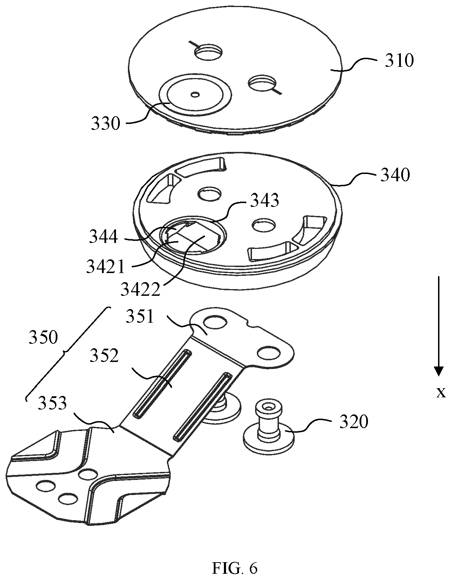

Fig.6 illustrates a schematic diagram of a local structure of the battery cell 20 provided by another embodiment of the present application.

As shown in Fig.6, in the embodiment of the present application, in addition to the components mentioned in the previous embodiments, the battery cell 20 also includes: a current collection member 350 and an electrode terminal 320 installed on the end cap 310, wherein the current collection member 350 is configured to connect the electrode terminal 320 to the electrode assembly 220 (not shown in Fig.6), and the first wall 3421 of the boss 342 is configured to abut against the current collection member 350.

Specifically, the current collection member 350 is configured to connect the electrode terminal 320 and the tab 221 in the electrode assembly 220.

Specifically, the current collection member 350 is located on one side of the insulating part 340 facing the interior of the battery cell 20, and can come into contact with the tab 221 in the electrode assembly 220. In addition, electrode outlet holes are formed in the current collection member 350, the insulating part 340, and the end cap 310, so that the electrode terminal 320 is connected to the current collection member 350 through the electrode outlet holes and formed on the end cap 310 through the insulating part 340.

In some embodiments, the current collection member 350 is a foldable component. Before the case 210 is closed by the end cap 310, the current collection member 350 is in an unfolded state. After the case 210 is closed by the end cap 310, the current collection member 350 is folded into a folded state.

As an example, as shown in Fig.6, the current collection member 350 comprises a first folding portion 351, a second folding portion 352 and a third folding portion 353. Before the case 210 is closed by the end cap 310, the first folding portion 351, the second folding portion 352 and the third folding portion 353 are in an unfolded state as shown in Fig.6.

It can be understood that, after the case 210 is closed by the end cap 310, the first folding portion 351, the second folding portion 352 and the third folding portion 353 are configured to be stacked in sequence along the first direction x, and the first folding portion 351, the second folding portion 352 and the third folding portion 353 are in a folded state.

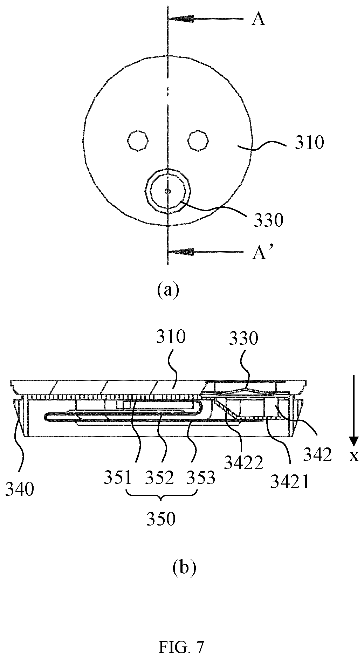

Fig.7 illustrates a top view and a sectional view of a combined component of the end cap 310 and the insulating part 340 provided by an embodiment of the present application. Wherein, the figure (a) in Fig.7 is a top view of the combined component of the end cap 310 and the insulating part 340, and the figure (b) in Fig.7 is a sectional view of an A-A' section in the figure (a).

The third folding portion 353 has a larger area, and thus can be well connected to the tab 221 of the electrode assembly 220.

As the third folding portion 353 has a larger area, it can extend to one side of the first wall 3421 of the boss 342 away from the end cap 310. The first wall 3421 of the boss 342, in addition to being used to separate the electrode assembly 220 and the pressure relief mechanism 330, can also be configured to abut against the third folding portion 353 of the current collection member 350. Therefore, the first wall 3421 of the boss 342 can improve the installation stability of the current collection member 350 in the battery cell 20, thereby improving the use reliability of the battery cell 20.

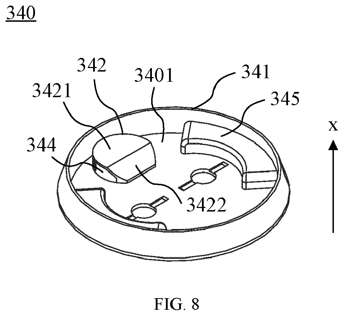

Corresponding to the combined component of the end cap 310 and the insulating part 340 shown in Figs.6 and 7, Fig.8 illustrates a schematic structural diagram of the insulating part 340 provided by another embodiment of the present application. As shown in Fig.8, the first direction x is upward, i.e., the insulating part 340 shown in Fig.8 is a schematic diagram of the insulating part 340 in Fig.6 after flipping up and down.

As shown in Fig.8, the boss 342 is further provided with a second wall 3422, the second wall 3422 is connected to the first wall 3421 and is slantly disposed toward a center of the end cap 310 (not shown in the drawing) relative to the first wall 3421, and an included angle between the first wall 3421 and the second wall 3422 is an obtuse angle.

Specifically, in the embodiment of the present application, the second wall 3422 is an inclined plane inclined towards the center of the end cap 310 relative to the first wall 3421. The inclined second wall 3422 can reduce the volume of the space protruding from the boss 342 towards the interior of the battery cell 20, thereby saving the internal space of the battery cell 20 and improving the energy density of the battery cell 20.

In addition, the inclined second wall 3422 can also prevent interference from the boss 342 with other components assembled on the insulating part 340 (such as the current collection member 350 mentioned in the previous embodiments), which is beneficial for improving the production efficiency of the battery cell 20 and the overall performance of the battery cell 20.

Moreover, the second wall 3422 is connected to the first wall 3421, and the included angle between the second wall 3422 and the first wall 3421 is an obtuse angle. The second wall 3422 and the first wall 3421 can be used together to separate the electrode assembly and the pressure relief mechanism 330, thereby improving the safety performance of the battery cell 20.

In summary, through the technical solution of the embodiment of the present application, an inclined second wall 3422 is disposed in the boss 342, which not only ensures the separation performance between the electrode assembly 220 and the pressure relief mechanism 330, but also saves the internal space of the battery cell 20, improves the energy density of the battery cell 20, prevents the interference from the boss 342 with other components assembled on the insulating part 340, and improves the production efficiency of the battery cell 20 and the overall performance of the battery cell 20.

In some embodiments, the projection of the second wall 3422 on the plane where the first through hole 343 is located is positioned in the first through hole 343.

Specifically, in the embodiment, the area of the second wall 3422 is less than or equal to the area of the first through hole 343, and the projection of the second wall 3422 on the plane where the first through hole 343 is located is totally positioned in the first through hole 343.

In the technical solution of the embodiment, the correspondence between the second wall 3422 and the first through hole 343 is good, and the second wall 3422 can have a good separation effect on the pressure relief mechanism 330 and the tab 221 of the electrode assembly 220. Moreover, the projection of the second wall 3422 on the plane where the first through hole 343 is located does not exceed the region where the first through hole 343 is located. The second wall 3422 does not occupy too much internal space of the battery cell 20, reducing the impact of the boss 342 on the internal space of the battery cell 20.

As shown in Fig.8, when the boss 342 has both the first wall 3421 and the second wall 3422, the second wall 3422 can be located on one side of the first wall 3421 towards the center of the insulating part 340. In addition, the second through hole 344 located on one side face of the boss 342 can be disposed close to the second wall 3422, that is, close to the center of the insulating part 340.

In the example shown in Fig.8, the shape of the second through hole 344 approximates a trapezoid. The length of an upper bottom of the trapezoid is equal to the length of a section of an arc corresponding to the upper bottom in the first wall 3421, the length of a lower bottom of the trapezoid is equal to the length of a section of an arc corresponding to the lower bottom in the first through hole 343, and the height of the trapezoid is less than or equal to the height of the boss 342. By calculating the area of the trapezoid, the area of the second through hole 344 can be obtained.

In addition, in the example shown in Fig.8, a support boss 345 is also provided on one side of the main wall 3401 of the insulating part 340 facing the interior of the battery cell 20. Different from the boss 342 configured to separate the electrode assembly 220 and the pressure relief mechanism 330, the support boss 345 is configured to support related components installed on the insulating part 340 (such as the current collection member 350 mentioned above) to ensure the safety and stability of the related components in the battery cell 20.

In some embodiments, the height of the boss 342 can be the same as the height of the support boss 345. The boss 342 and the support boss 345 can jointly support the current collection member 350 in the aforementioned embodiment of the present application.

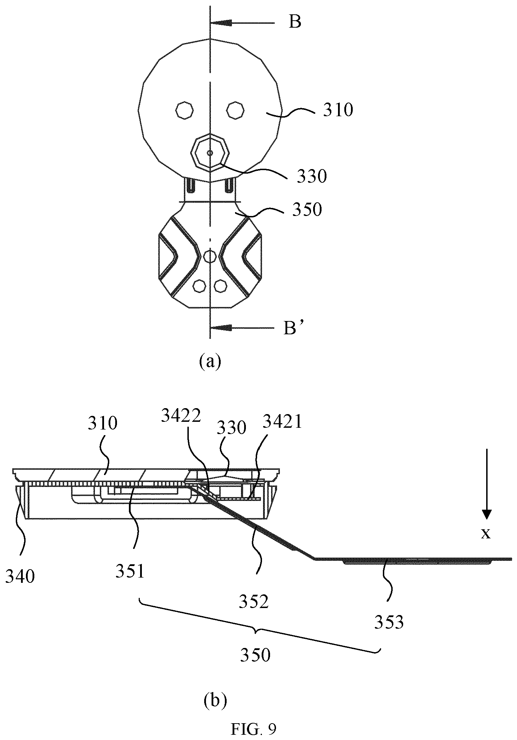

Fig.9 illustrates a top view and a sectional view of a combined component of the end cap 310 and the insulating part 340 provided by another embodiment of the present application. Wherein, the figure (a) in Fig.9 is a top view of a combined component of the end cap 310 and the insulating part 340, and the figure (b) in Fig.9 is a sectional view of a B-B' section in the figure (a).

As shown in Fig.9, the battery cell 20 further includes a current collection member 350, wherein before the case 210 is closed by the end cap 310, the current collection member 350 is in an unfolded state, and the second wall 3422 of the boss 342 is configured to abut against the current collection member 350.

Specifically, as shown in Fig.9, the first folding portion 351 in the current collection member 350 is first assembled on the insulating part 340, and the second folding portion 352 and the third folding portion 353 are both in an unfolded state. Besides, the inclined second wall 3422 in the boss 342 can prevent interference on the second folding portion 352, such that the third folding portion 353 can extend a longer distance relative to the insulating part 340. The inclined second wall 3422 can also be configured to support the second folding portion 352, ensuring the stability of the current collection member 350.

When the current collection member 350 is in the state shown in Fig.9, the third folding portion 353 in the current collection member 350 is welded with the electrode assembly 220 inside the battery cell 20. When the boss 342 does not interfere with the current collection member 350 such that the third folding portion 353 can extend a longer distance relative to the insulating part 340, a welding tool configured to weld the third folding portion 353 and the electrode assembly 220 can more conveniently achieve welding between the two, thus improving welding efficiency and welding performance. Moreover, the second wall 3422 of the boss 342 is configured to abut against the current collection member 350, and the boss 342 can further provide support for the current collection member 350 through the second wall 3422, resulting in high stability of the current collection member 350. The welding performance between the third folding portion 353 and the electrode assembly 220 is further improved.

In summary, according to the technical solution of the embodiment of the present application, besides avoiding interference from the boss 342 with the current collection member 350, the second wall 3422 of the boss 342 can further support the second folding portion 352 of the current collection member 350 to improve the installation stability of the current collection member 350 in the battery cell 20, thereby improving the use reliability of the battery cell 20.

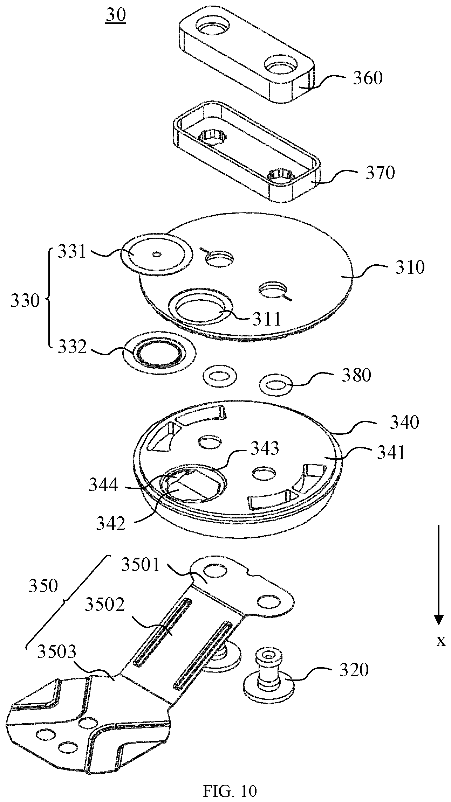

Fig.10 illustrates a schematic diagram of a local structure of the battery cell 20 provided by another embodiment of the present application.

As shown in Fig. 10, in the embodiment of the present application, in addition to the components mentioned in the previous embodiments, the battery cell 20 further includes: a riveting part 360 and an insulation part 370. Wherein, the riveting part 360 is arranged on one side of the end cap 310 facing the exterior of the battery cell 20; the riveting part 360 is configured to fix the electrode terminal 320 protruding from the end cap 310.

In some embodiments, the riveting part 360 is made of a metal material. An influx component at the exterior of the battery cell 20 can be connected to the riveting part 360 to output electrical energy of the battery cell 20. The insulation part 370 is arranged between the riveting part 360 and the end cap 310 to separate the end cap 310 and the riveting part 360. In some embodiments, the material of the insulation part 370 includes but is not limited to a plastic material.

Continuing to refer to Fig.10, in addition to the riveting part 360 and the insulation part 370, the battery cell 20 further includes a sealing ring 380 for sealing the electrode outlet holes in the end cap 310 and/or the insulating part 340. By setting the sealing ring 380, the sealing performance of the battery cell 20 can be ensured, and leakage of an electrolyte inside the battery cell 20 is prevented, thereby ensuring the reliability and safety of the battery cell 20.

In addition, in the embodiment shown in Fig.10, the pressure relief mechanism 330 includes a protective sheet 331 and a pressure relief plate 332, wherein the pressure relief plate 332 can be provided with notches, and the protective sheet 331 is disposed on one side of the pressure relief plate 332 facing the exterior of the battery cell 20 to protect the pressure relief plate 332. In order to install the pressure relief mechanism 330, a third through hole 311 corresponding to the pressure relief mechanism 330 is provided on the end cap 310, and the protective sheet 331 and the pressure relief plate 332 are respectively arranged at both sides of the third through hole 311.

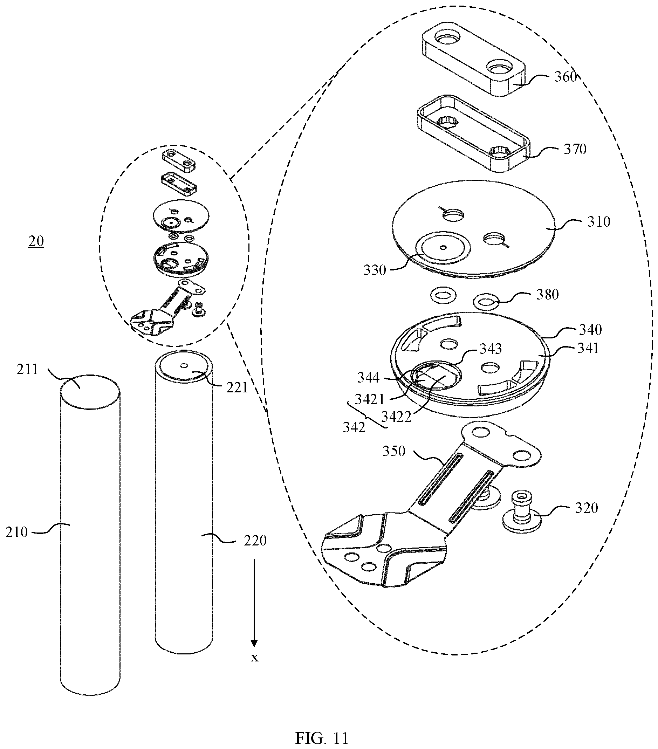

Fig.11 illustrates a schematic structural diagram of the battery cell 20 provided by another embodiment of the present application.

In the embodiment of the present application, the battery cell 20 includes a case 210 with an opening 211. As an example, as shown in Fig.11, the case 210 is a hollow cylindrical case with the end face of at least one end having an opening 211. In addition, the battery cell 20 further includes an electrode assembly 220 accommodated in the case 210 and an end cap 310 covering the opening 211. Wherein, the end cap 310 is equipped with a pressure relief mechanism 330, which is configured to be actuated when an internal pressure or temperature of the battery cell 20 reaches a preset threshold so as to discharge the internal pressure or temperature to the exterior of the battery cell 20. In some embodiments, the end of the electrode assembly 220 is provided with a tab 221, and the pressure relief mechanism 330 and the tab 221 of the electrode assembly 220 are correspondingly arranged. Further, the battery cell 20 further includes an insulating part 340, which is disposed between the end cap 310 and the electrode assembly 220 to insulate and separate the end cap 310 and the electrode assembly 220. Specifically, the insulating part 340 includes a body 341 and a boss 342, a region, corresponding to the pressure relief mechanism 330, of the body 341 is provided with a first through hole 343. The boss 342 is connected to the body 341 and extends towards the electrode assembly 220. Wherein, the boss 342 is of a hollow structure, and a second through hole 344 is formed on a side face of the boss 342. The first through hole 343 and the second through hole 344 are configured to form an exhaust path from the interior of the battery cell 20 to the pressure relief mechanism 330. In addition, the boss 342 has a first wall 3421 facing the interior of the battery cell 20, and a region, corresponding to the first through hole 343, in the first wall 3421 is a physical region, and the first wall 3421 of the boss 342 is also configured to abut against the current collection member 350.

An embodiment of the present application further provides a battery 10. The battery 10 includes a box body and a plurality of battery cells 20 mentioned in the aforementioned embodiments, wherein the plurality of battery cells 20 are accommodated in the box body.

An embodiment of the present application further provides an electrical device. The electrical device includes the battery 10 mentioned in the aforementioned embodiments, wherein the battery 10 is configured to provide electrical energy for the electrical device.

In some embodiments, the electrical device may be a vehicle 1, a ship, or a spacecraft.

The above describes the battery cell 20, the battery 10, and the electrical device in the embodiments of the present application. A method and a device for manufacturing the battery cell in the embodiments of the present application will be described below, wherein for any part which will not be described in detail, the above embodiments can be referred to.

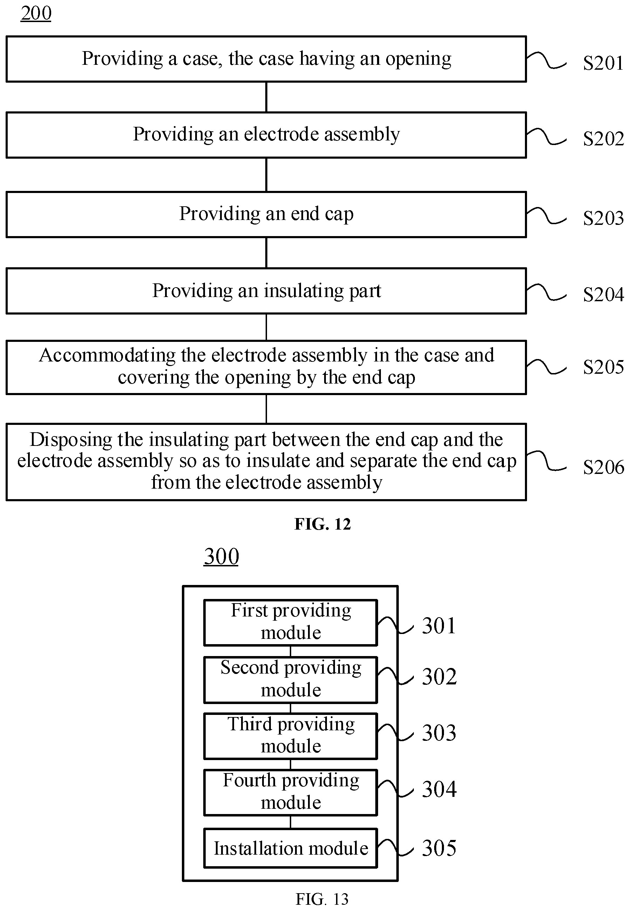

Fig. 12 illustrates a schematic flow diagram of a method 200 for manufacturing the battery cell disclosed by an embodiment of the present application. As shown in Fig.12, the method 200 comprises the following steps.

S201: providing a case 210, the case 210 having an opening 211.

S202: providing an electrode assembly 220.

S203: providing an end cap 310, the end cap 310 being provided with a pressure relief mechanism 330, the pressure relief mechanism 330 being configured to be actuated when an internal pressure or temperature of the battery cell 20 reaches a preset threshold so as to discharge the internal pressure or temperature to the exterior of the battery cell 20.

S204: providing an insulating part 340, the insulating part 340 comprising a body 341 and a boss 342, a region of the body 341 corresponding to the pressure relief mechanism 330 being provided with a first through hole 343, the boss 342 being connected to the body 341 and extending towards the electrode assembly 220, a side face of the boss 342 being provided with a second through hole 344, and the first through hole 343 and the second through hole 344 being configured to form an exhaust path from the interior of the battery cell 20 to the pressure relief mechanism 330.

S205: accommodating the electrode assembly 220 in the case 210 and covering the opening 211 by the end cap 310.

S206: disposing the insulating part 340 between the end cap 310 and the electrode assembly 220 so as to insulate and separate the end cap 310 from the electrode assembly 220.

Fig.13 illustrates a schematic blow diagram of a device 300 for manufacturing the battery cell disclosed by an embodiment of the present application. As shown in Fig. 13, the device 300 for manufacturing the battery includes: a first providing module 301, a second providing module 302, a third providing module 303 and an installation module 304.

The first providing module 301 is configured to provide a case 210, and the case 210 has an opening 211.

The second providing module 302 is configured to provide an electrode assembly 220.

The third providing module 303 is configured to provide an end cap 310, the end cap 310 is provided with a pressure relief mechanism 330, and the pressure relief mechanism 330 is configured to be actuated when an internal pressure or temperature of the battery cell 20 reaches a preset threshold so as to discharge the internal pressure or temperature to the exterior of the battery cell 20.

The fourth providing module 304 is configured to provide an insulating part 340, the insulating part 340 comprises a body 341 and a boss 342, the body 341 is provided with a first through hole 343 in a region corresponding to the pressure relief mechanism 330, the boss 342 is connected to the body 341 and extends towards the electrode assembly 220, a side face of the boss 342 is provided with a second through hole 344, and the first through hole 343 and the second through hole 344 are configured to form an exhaust path from the interior of the battery cell 20 to the pressure relief mechanism 330.

The installation module 305 is configured to accommodate the electrode assembly 220 in the case 210 and cover the opening 211 by the end cap 310, and to dispose the insulating part 340 between the end cap 310 and the electrode assembly 220 so as to insulate and separate the end cap 310 from the electrode assembly 220.

While the present application has been described with reference to preferred embodiments, various modifications may be made thereto and equivalents may be substituted for components thereof without departing from the scope of the present application. In particular, the various technical features mentioned in various embodiments may be combined in any way as long as no structural conflict exists. The present application is not limited to the particular embodiments disclosed herein, but includes all technical solutions falling within the scope of the claims.

## Claims

1. A battery cell (20), comprising:
a case (210) having an opening (211);
an electrode assembly (220) accommodated in the case (210);
an end cap (310) covering the opening (211) and provided with a pressure relief mechanism (330), the pressure relief mechanism (330) being configured to be actuated when an internal pressure or temperature of the battery cell (20) reaches a preset threshold so as to discharge the internal pressure to an exterior of the battery cell (20); and
an insulating part (340), disposed between the end cap (310) and the electrode assembly (220) to insulate and separate the end cap (310) and the electrode assembly (220), the insulating part (340) comprising a body (341) and a boss (342), a region of the body (341) corresponding to the pressure relief mechanism (330) being provided with a first through hole (343), the boss (342) being connected to the body (341) and extending towards the electrode assembly (220), a side face of the boss (342) being provided with a second through hole (344), and the first through hole (343) and the second through hole (343) being configured to form an exhaust path from an interior of the battery cell (20) to the pressure relief mechanism (330).

2. The battery cell (20) according to claim 1, wherein the boss (342) is of a hollow structure.

3. The battery cell (20) according to claim 1 or 2, wherein a ratio of an area of the second through hole (344) to an area of a pressure relief region in the pressure relief mechanism (330) is greater than or equal to 40%.

4. The battery cell (20) according to any one of claims 1 to 3, wherein the side face of the boss (342) is provided with a plurality of the second through holes (344).

5. The battery cell (20) according to any one of claims 1 to 4, wherein the pressure relief mechanism (330) and a tab (221) of the electrode assembly (220) are correspondingly disposed, the boss (342) has a first wall (3421) facing the interior of the battery cell (20), and a region, corresponding to the first through hole (343), in the first wall (3421) is a physical region.

6. The battery cell (20) according to claim 5, wherein the battery cell (20) further comprises: a current collection member (350) and an electrode terminal (320) installed on the end cap (310),
wherein the current collection member (350) is configured to connect the electrode terminal (320) and the electrode assembly (220), and the first wall (3421) of the boss (342) is configured to abut against the current collection member (350).

7. The battery cell (20) according to claim 5 or 6, wherein the boss (342) is further provided with a second wall (3422), the second wall (3422) is connected to the first wall (3421) and is slantly disposed towards a center of the end cap (310) relative to the first wall (3421), and an included angle between the first wall (3421) and the second wall (3422) is an obtuse angle.

8. The battery cell (20) according to claim 7, wherein a projection of the second wall (3422) in a plane where the first through hole (343) is located is positioned in the first through hole (343).

9. A battery (10), comprising a box body,
and a plurality of the battery cells (20) according to any one of claims 1 to 8, the plurality of the battery cells (20) being accommodated in the box body.

10. An electrical device (1), comprising: the battery (10) according to claim 10, the battery being configured to provide electric energy for the electrical device.

11. A method (200) of manufacturing a battery cell, comprising:
providing a case (210), the case (210) having an opening (211);
providing an electrode assembly (220);
providing an end cap (310), the end cap (310) being provided with a pressure relief mechanism (330), the pressure relief mechanism (330) being configured to be actuated when an internal pressure or temperature of the battery cell (20) reaches a preset threshold so as to discharge the internal pressure to an exterior of the battery cell (20);
providing an insulating part (340), the insulating part (340) comprising a body (341) and a boss (342), a region of the body (341) corresponding to the pressure relief mechanism (330) being provided with a first through hole (343), the boss (342) being connected to the body (341) and extending towards the electrode assembly (220), a side face of the boss (342) being provided with a second through hole (344), and the first through hole (343) and the second through hole (344) being configured to form an exhaust path from an interior of the battery cell (20) to the pressure relief mechanism (330);
accommodating the electrode assembly (220) in the case (210), and covering the opening (211) by the end cap (310); and
disposing the insulating part (340) between the end cap (310) and the electrode assembly (220) so as to insulate and separate the end cap (310) and the electrode assembly (220).

12. A device (300) of manufacturing a battery cell, comprising:
a first providing module (301), configured to provide a case (210), the case (210) having an opening (211);
a second providing module (302), configured to provide an electrode assembly (220);
a third providing module (303), configured to provide an end cap (310), the end cap (310) being provided with a pressure relief mechanism (330), the pressure relief mechanism (330) being configured to be actuated when an internal pressure or temperature of the battery cell (20) reaches a preset threshold so as to discharge the internal pressure to an exterior of the battery cell (20);
a fourth providing module (304), configured to provide an insulating part (340), the insulating part (340) comprising a body (341) and a boss (342), a region of the body (341) corresponding to the pressure relief mechanism (330) being provided with a first through hole (343), the boss (342) being connected to the body (341) and extending towards the electrode assembly (220), a side face of the boss (342) being provided with a second through hole (344), and the first through hole (343) and the second through hole (344) being configured to form an exhaust path from an interior of the battery cell (20) to the pressure relief mechanism (330); and
an installation module (305), configured to accommodate the electrode assembly (220) in the case (210) and cover the opening (211) by the end cap (310), and to dispose the insulating part (340) between the end cap (310) and the electrode assembly (220) so as to insulate and separate the end cap (310) and the electrode assembly (220).
